# EUROPEAN PATENT APPLICATION

(11) **EP 2 375 058 A2**
(43) Date of publication of application: **12.10.2011**
(21) Application number: 11002815.6
(22) Date of filing: 05.04.2011
(51) Int. Cl.: F03D 1/00, F03D 11/00

(54) **Assembly of components inside a large wind turbine**

(30) Priority: 08.04.2010 ES 201000445
(71) Applicant: Gamesa Innovation & Technology, S.L., 31621 Sarriguren (ES)
(72) Inventor: Ruiz Urien, Ignacio, 48170 Zamudio - Bizkaia (ES); Moreno Catalan, Jesus, 31621 Sarriguren - Navarra (ES); Calderon Pacho, Alberto, 48170 Zamudio - Bizkaia (ES); Perez Unzurrunzaga, Ibon, 31621 Sarriguren - Navarra (ES); Linares de la Puerta, Alberto, 31621 Sarriguren - Navarra (ES)

(57) **Abstract**

Summary

Assembly of components inside a large wind turbine, positioned between the upper section (3) of the tower (1) and under the nacelle. The components, which are transported pre-assembled to the site, are horizontal, circular platforms (6a and 6b), a vertical ladder (5) that goes through both platforms (6a and 6b) and a central structure (7) that joins and integrates the entire unit. The middle connection part (8) fitted onto the nacelle frame (4) allows the aforementioned unit to be coupled to the nacelle. The platforms (6a and 6b) house electrical devices for the drive train and the yaw system, as well as the lubrication and refrigeration system for the drive train. Once all the components have been assembled, they turn together with the nacelle while it rotates to face the wind.

## Description

### Object of the invention

This invention refers to the assembly of components inside the tower of a large wind turbine and, in particular, to the assembly of said components between the lower part of the nacelle and the upper part of the tower.

### Background of the invention

The development of new wind turbines has resulted in an increase in their size and power. Large wind turbines enable more capacity to be installed at the same site and reduce the visual impact of a farm consisting of several wind turbines, On the other hand, because the height at which the rotor hub is located is related to the energy captured from the wind, tall, tubular, truncated cone-shaped and self-supporting towers tend to be used. The tower design requires a general knowledge of the system, and the criteria relating to accessibility to both the wind rotor and the equipment installed in the nacelle are very important. For this reason, it is quite common for the tower to house a ladder and various platforms giving access to the nacelle, said ladder and platforms being anchored to the tower walls. Fastening is done by welding, but this method imposes a penalty on the wall thickness. In this regard, patents EP1156175 and US200922319 protect various ways of supporting the platforms inside the tower, anchoring them to the walls. The power cables going down from the generator located in the nacelle to the tower base are also located inside the tower. From there they are connected to the grid.

The design of the yaw shaft of the wind rotor and its integration into the drive train and into the nacelle structure is one of the fundamental points for the wind turbine's design, since said structure supports the loads that are later transmitted to the tower. An adequate distribution of the constituent elements of the drive train allows for a compact nacelle size and a load distribution which is suitable for the large wind turbines used today. For this reason, this invention is focused on saving space inside the nacelle by installing electrical and lubrication components on the platforms fitted according to the invention.

Fastening the components inside the tower by means of bolts or welding requires increasing the wall thickness as its fatigue resistance decreases. This invention proposes an original system for assembling components inside the tower, solving the problem related to the penalty imposed on the wall thickness.

### Description of the invention

The invention describes the assembly of components such as one or more horizontal platforms that encompass nearly the entire inner diameter of the tower, a vertical ladder that connects the inside of the nacelle and the aforementioned platforms, and a central structure that joins the platforms and the ladder, as well as the layout of this unit inside the wind turbine. The invention uses the inside of the tower to house the unit thus assembled, without using welding on the tower wall and eliminating the penalty imposed on the wall thickness, and also anchors the aforementioned unit to the nacelle frame, from which it remains attached and suspended.

The central structure that joins the platforms and the ladder is designed in such a way that it provides the maximum free space above the platform; the platforms are used to house the power cables inside a central structure and are fastened quickly and easily to the nacelle frame through a central connection part.

One object of the invention is to achieve an improved layout above the aforementioned platforms, avoiding welding on the tower walls, and provide them with as many holes as necessary for implementing the ladder and the central auxiliary structure.

Another object of the invention is for the nacelle frame to support the unit formed by the central structure, horizontal platform and vertical ladder, in such a way that the entire unit rotates simultaneously with the nacelle, since the nacelle must at all times be facing the prevailing wind.

Another object of the invention is to simplify the on-site assembly process, since the module formed by the aforementioned components is fitted to and transported in the upper section of the tower with the help of temporary tools that are removed upon completion of on-site assembly.

And finally, another object of the invention is for the assembly of these components to provide the necessary surface above the platforms in order to include the electrical control system of the drive train and Its lubrication, thus minimizing the nacelle size.

### Brief description of the drawings

The following figures are included in order to explain how the aforementioned components are assembled and joined to the nacelle frame:
Figure 1 shows a sector of the tower and the nacelle frame.
Figure 2 shows a perspective view of the frame, the platforms, the vertical ladder and the central structure.
Figure 3 shows an exploded view of the components used in the assembly depicted in the preceding figure.
Figure 4 shows a final layout of the platforms and the equipment arranged on them.

### Description of the preferential embodiment

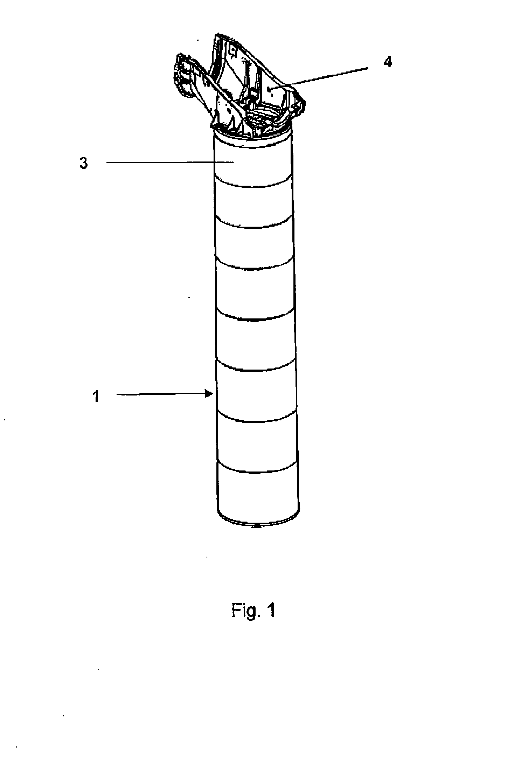

As shown in Figure 1, the tower (1) of a wind turbine consists of various sections or sectors. The sections are transported separately and assembled on-site. The components which are the object of the invention are transported already assembled inside the upper section (3) with the help of temporary tools. Once the upper section (3) of the tower (1) and the nacelle frame (4) have been hoisted, the unit consisting of platforms, ladder and central structure is unhooked from the last section (3) of the tower and joined to the frame (4).

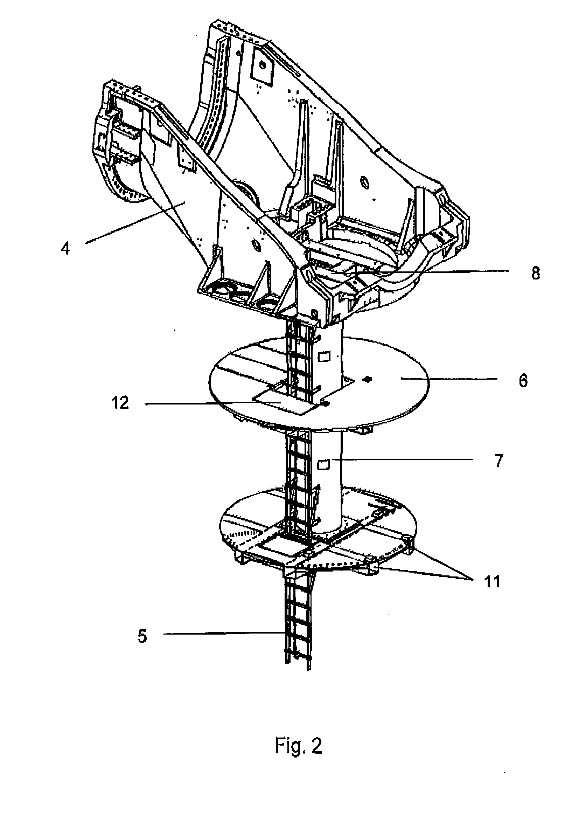

Figure 2 shows the nacelle frame (4). The frame is a cast iron component that supports the nacelle and the rotor (not shown in the figure). In order to access the nacelle from outside the wind turbine, a ladder (5) is needed to enable the operators to climb up inside the tower (1). The ladder (5) is related to anther important component that needs to be fitted inside the tower: the support platforms (6). These circular-section horizontal platforms (6) are placed at regular intervals inside the tower and are usually attached to its walls. In the assembly described in this embodiment, the horizontal platforms (6) and the vertical ladder (5) are joined to a central structure (7) which, in turn, secures the entire unit by means of a middle part (8) that enables it to be joined to the frame (4).

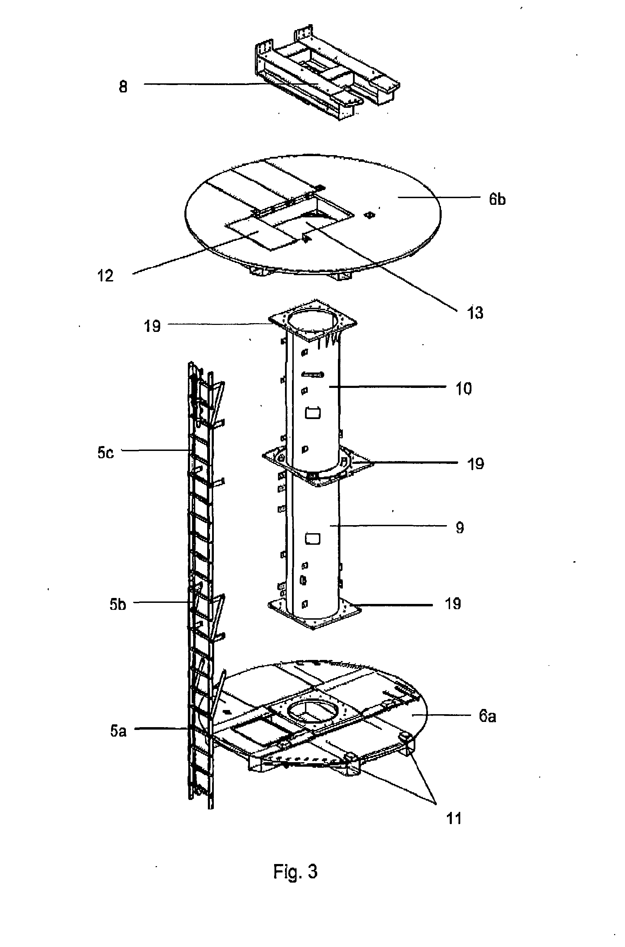

Figures 2 and 3 show that the central structure (7) is a single part joined to the two platforms (6a and 6b) and to the middle connection part (8). This central structure (7) is a hollow cylindrical body whose lower part (9) joins the lower platform (6a) and the upper platform (6b) and provides support for the middle section of the ladder (5b), and whose upper part (10) joins the upper platform (6b) and the middle connection part (8) and provides support for the upper section of the ladder (5c). The connection points of the platforms and the middle connection part with the central structure (7) are three square plates (19) which are placed on the upper part, on the middle part and on the lower part, alongside the aforementioned central structure (7).

The platforms (6) have a bearing structure (11) at the base, hatchways (12) that cover the ladder opening according to needs and a central hole (13) where they connect the central structure (7).

The vertical ladder (5) has fastening bars that are joined to the central structure (7) at the middle (5b) and upper (5c) sections. The lower section of the ladder (5a), which is attached by means of its corresponding bars to the support framework (11), hangs from the lower platform (6a).

The intermediate structure (8) that is attached to the central structure (7) is anchored to the frame (4) by means of conventional connection components. The intermediate structure (8) consists of a framework with two main beams and a number of crossbeams. They are anchored with horizontal and vertical tabs located at the ends of the main beams.

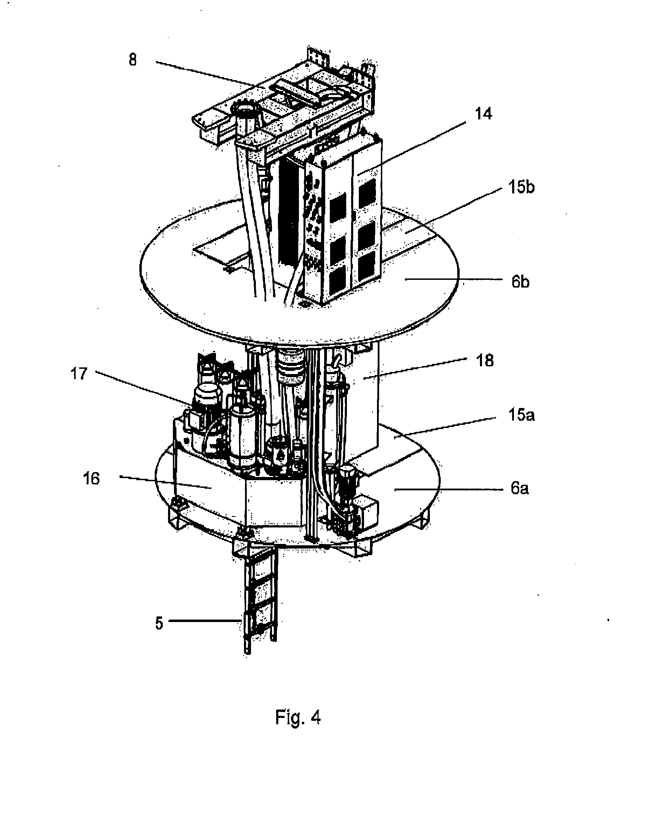

As shown in Figure 4, the platforms (6a and 6b) house various components that take up a considerable amount of space. The upper platform (6b) includes an electrical cabinet (14) for the yaw system and has ample free space for handling carts with tools for carrying out maintenance tasks on the yaw system. It also has return pulleys (not shown in the figure) anchored to the assembly made up by the crossbeams of the middle connection part (8), which together with the nacelle hoist allow heavy parts to be exchanged inside the tower. To this end, the upper platform (6b) includes a two-leaf hatchway (15b), while the lower platform (6a) includes another opening covered by a simple hatchway (15a). The lower platform (6a) includes the lubrication tank and the oil refrigeration system (16) and the control cabinet (18) of the lubrication and refrigeration system (16).

In a second practical embodiment, the auxiliary fastening elements (7) consist of a series of beams (there can be three or four arranged uniformly) which connect the platforms (6) and the middle connection part (8) anchored to the frame (4).

## Claims

1. Assembly of components inside a large wind turbine, specifically in the upper section (3) of the tower (1), just below the nacelle, the components consisting at least of one platform (6) and a ladder (5), characterized because the platform(s) (6a and 6b) are horizontal, the ladder (5) is vertical and, together with a central structure (7) consisting of one single part traversed by both platforms (6a and 6b), they make up a unit which is integrated by means of a middle connection part (8) into the nacelle frame (4), turning together with the nacelle.

2. Assembly of components inside a large wind turbine, according to claim 1, characterized because the central structure (7) is a hollow cylindrical body that, using a square plate (19), joins the platforms (6a and 6b) and the middle connection part (8) at three points both ends and the center.

3. Assembly of components inside a large wind turbine, according to claim 1, characterized because the vertical ladder (5) has fastening bars that join the central structure (7) at the middle (5b) and upper (5c) section, while the lower section of the ladder (5a) is attached by means of its corresponding bars to the bearing structure (11) of the lower platform (6a), from which it hangs.

4. Assembly of components inside a large wind turbine, according to claim 1, characterized because the middle connection part (8) is a framework consisting of main beams and crossbeams which are anchored to the frame (4) by means of connection components placed at the ends, made up of horizontal and vertical tabs located at the ends of the main beams.

5. Assembly of components inside a large wind turbine, according to claim 1, characterized because the platforms (6a and 6b) have a bearing structure (11) at the base and hatchways (12) that cover the ladder opening, arranged next to a central hole (13).

6. Assembly of components inside a large wind turbine, according to claim 5, characterized because the platform (6b) includes an electrical cabinet (14) and a two-leaf hatchway (16b).

7. Assembly of components inside a large wind turbine, according to claim 5, characterized because the platform (6a) has a simple hatchway (15a) and includes a lubrication tank and oil refrigeration system (96) and a control cabinet (18) for the lubrication and refrigeration system.
